**Europäisches Patentamt**

**European Patent Office**

**Office européen des brevets**

(11) Veröffentlichungsnummer: **0 243 677**
**B1**

(12) # EUROPÄISCHE PATENTSCHRIFT

(45) Veröffentlichungstag der Patentschrift:
07.02.90

(51) Int. Cl.⁴: **F16K 24/06,** F16K 31/06,
A47J 31/46

(21) Anmeldenummer: 87104377.4

(22) Anmeldetag: 25.03.87

(54) **Elektromagnetventil, insbesondere Auslaufventil für Heissgetränkeautomaten.**

(30) Priorität: 22.04.86 DE 3613481

(43) Veröffentlichungstag der Anmeldung:
04.11.87 Patentblatt 87/45

(45) Bekanntmachung des Hinweises auf die Patenterteilung:
07.02.90 Patentblatt 90/6

(84) Benannte Vertragsstaaten:
AT BE CH DE FR GB IT LI NL SE

(56) Entgegenhaltungen:
EP-A- 0 085 852
DE-A- 2 653 231
DE-U- 1 705 867
DE-U- 1 830 253
DE-U- 1 953 912

(73) Patentinhaber: A. und K. Müller GmbH & Co. KG,
Bücherstrasse 31-37, D-4000 Düsseldorf 13(DE)

(72) Erfinder: Moidenhauer, Hermann, Lüdenscheider
Strasse 2, D-4000 Düsseldorf 12(DE)

(74) Vertreter: Feder, Heinz, Dr. et al, Dominikanerstrasse 37,
D-4000 Düsseldorf 11(DE)

## Beschreibung

Die Erfindung betrifft ein Elektromagnetventil, insbesondere ein Auslaufventil für Heißgetränkeautomaten, mit den Merkmalen aus dem Oberbegriff des Patentanspruchs 1.

Heißgetränkeautomaten bekannter Bauart weisen im allgemeinen einen Heißwasserboiler für die Erzeugung und die Bevorratung des Brühwassers auf, wobei das Wasser in diesem Boiler bis unterhalb der Siedegrenze erhitzt wird, um eine thermostatische Regelung zu ermöglichen. Bei Temperaturen von etwa 95 bis 97°C werden aber aus dem Brühwasser die meisten Härtebildner abgeschieden und es bilden sich Ablagerungen im Boiler, die sich vor allem auf dem Boilerboden absetzen. Um eine Vermischung des nachgeführten Speisewassers mit dem erhitzten Brühwasser zu vermeiden, erfolgt die Nachspeisung mit Wasser im allgemeinen über ein besonderes Wassereinlaufventil mit niveauabhängiger Steuerung am Boden des Boilers. Damit immer das jeweils heißeste Brühwasser abgezapft werden kann, wird die Entnahmestelle meist ziemlich hoch am Boiler angeordnet. Die Höhe der Entnahmestelle soll dabei so gewählt sein, daß einerseits das heißeste Wasser entnommen werden kann, andererseits aber noch genügend Niveau oberhalb der Entnahmestelle vorhanden ist, um eine schnelle Befüllung eines Getränkebechers zu erzielen. An der Entnahmestelle des Boilers wird im allgemeinen ein elektromagnetisch angesteuertes Auslaufventil angeordnet. Da die Auslaufstelle des Brühwassers meist in Bodennähe des Boilers angeordnet ist, schließt sich an den Abflußkanal des Auslaufventils ein als Schlauch oder Rohr ausgebildetes Verlängerungsstück an. Dieses Verlängerungsstück muß dem Schließen des Auslaufventils belüftet sein, weil sonst das im Verlängerungsstück verbleibende Wasser bis zur nächsten Zapfung erkalten würde.

Es sind Auslaufventile mit den eingangs und im Oberbegriff des Patentanspruchs 1 erwähnten Merkmalen im Handel bekannt. Bei diesen Ventilen ist der erste Anschlußkanal als Abflußkanal und der zweite Anschlußkanal als Zuflußkanal ausgebildet, so daß bei geschlossenem Ventil die Ventilkammer und der direkt mit ihr verbundene Innenraum des Führungsrohres über die Bohrung im Kopfstück belüftet ist und damit auch der im geschlossenen Zustand mit der Ventilkammer verbundene Abflußkanal. Durch die gesteuerte Belüftung des Abflußkanals ist das Verlängerungsstück am Abflußkanal in die gesamte Niveauhöhe einzurechnen und es ist mit derartigen Ventilen möglich, höhere Durchflußwerte zu erzielen, die von Niveauschwankungen des Flüssigkeitsspiegels vor dem Auslaßventil nahezu unbeeinflußt sind.

Ein großer Nachteil dieser bekannten Ventile ist jedoch ihre hohe Störanfälligkeit, weil die Flüssigkeit in den Raum um den Magnetanker eintritt und dort eine ständig fortschreitende Verkalkung verursacht. Ein solches Auslaufventil erfordert also einen hohen Serviceaufwand.

Die der Erfindung zugrunde liegende Aufgabe bestand darin, ein Elektromagnetventil, das insbesondere als Auslaufventil für Heißgetränkeautomaten dienen soll, der oben erwähnten Bauart so auszubilden, daß es einerseits als sogenanntes mediengetrenntes Ventil ausgebildet ist, bei dem die Flüssigkeit nicht in den Raum um den Magnetanker eintritt, mit dem aber andererseits die erwähnte gesteuerte Belüftung des Abflußkanals bei geschlossenem Ventil stattfindet.

Die Lösung dieser Aufgabe erfolgt erfindungsgemäß mit den Merkmalen aus dem kennzeichnenden Teil des Patentanspruchs 1.

Vorteilhafte Ausführungsformen des erfindungsgemäßen Ventils sind in den Unteransprüchen beschrieben.

Der Grundgedanke der Erfindung besteht darin, die Ventilkammer von dem Raum um den Magnetanker durch eine an sich bekannte Trennmembran abzutrennen, wobei im geschlossen Zustand des Ventils der Abflußkanal durch das koaxial durch den Ventilteller und den Magnetanker nach außen geführte Belüftungsrohre belüftet wird. Die Ventilkammer selbst wird bei dem erfindungsgemäßen Ventil nicht belüftet.

Bei Ventilen mit Trennmembranen kann bei der Bewegung des Magnetankers in der Ventilkammer eine Volumenänderung auftreten, die sich bei Entregung des Magnetsystems schlagartig vollzieht und kurzzeitig einen Überdruck im Ventil erzeugt. Dieser Überdruck kann grundsätzlich dazu führen, daß durch das Belüftungsrohr Flüssigkeit nach außen gedrückt wird. Da dies unerwünscht ist, weil auf diese Weise wieder Flüssigkeit in das Magnetsystem gelangen könnte, ist es vorteilhaft, wenn das erfindungsgemäße Ventil die Merkmale des Patentanspruchs 2 aufweist. Zur Sicherheit kann durch die Merkmale des Patentanspruchs 4 noch dafür gesorgt werden, daß eventuell dennoch aus dem Belüftungsrohr austretende Flüssigkeit aufgefangen wird und nicht in das Magnetsystem gelangen kann.

Es hat sich gezeigt, daß das erfindungsgemäße Ventil außerordentlich störungsfrei und mit hoher Dosiergenauigkeit arbeitet.

Im folgenden wird anhand der beigefügten Zeichnungen ein Ausführungsbeispiel für ein Elektromagnetventil nach der Erfindung in Verwendung als Auslaufventil für einen Heißgetränkeautomaten beschrieben.

In den Zeichnungen zeigen:

Fig. 1 einen axialen Querschnitt durch ein Ventil nach der Erfindung;

Fig. 2 die Anordnung des Ventils nach Fig. 1 an einem Heißgetränkeautomaten in schematischer Darstellung.

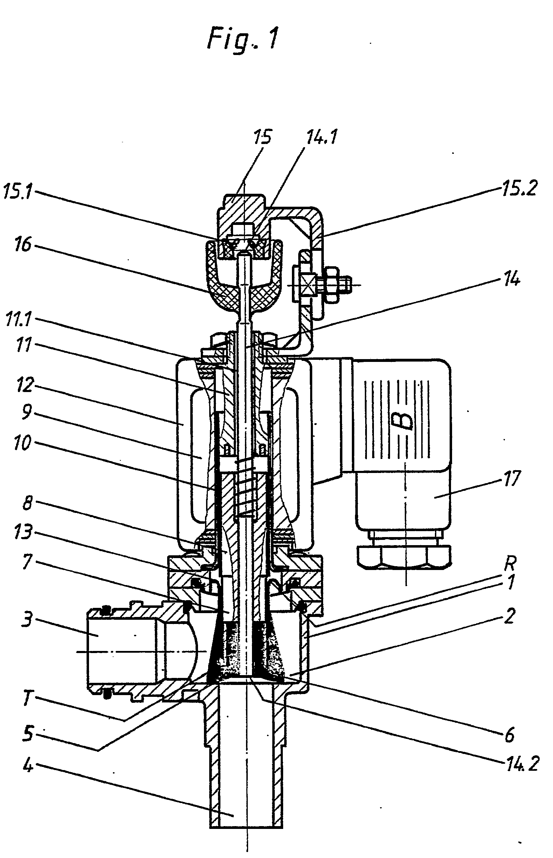

Das in Fig. 1 dargestellte Elektromagnetventil besitzt ein Ventilgehäuse 1, in dem eine Ventilkammer 2 angeordnet ist. Die Einbaurichtung des Ventils ist im allgemeinen so, daß der mit der Ventilkammer 2 direkt verbundene Zuflußkanal 3 horizontal verläuft, während der mit der Ventilkammer 2 über einen Ventilsitz 5 verbundene Abflußkanal 4 senkrecht nach unten führt. Dem Ventilsitz 5 gegenüber liegt ein Ventilteller 6, der über einen aus der Ventilkammer 2 nach oben herausgeführten Ventilshaft 7 mit einem Magnetanker 8 verbunden ist, der in einem Führungsrohr 10 geführt ist, welches von einer an der Oberseite des Ventilgehäuses 1 angeordneten Magnetspule 9 umgeben ist. Das Führungsrohr 10 ist an seiner Oberseite abgeschlossen durch ein dem Magnetanker 8 gegenüberliegendes Kopfstück 11, das mit einem Magnetjoch 12 verbunden ist. An der Seite des Magnetsystems ist ein elektrischer Anschluß 17 angeordnet.

Der Innenraum des Führungsrohres 10, in dem der Magnetanker 8 geführt ist, ist von der Ventilkammer 2 durch eine Rollmembran 13 abgetrennt, deren äußerer Rand dichtend mit dem Oberteil des Ventilgehäuses 1 verbunden ist, während ihr innerer Rand einstückig mit dem Ventilteller 6 verbunden ist, der also in die Trennmembran integriert ist.

Durch den Ventilteller, 6, den Ventilschaft 7 und den Magnetanker 8 ist ein Belüftungsrohr 14 geführt, das mit diesen Teilen formschlüssig verbunden ist und somit die Bewegungen des Magnetankers 8 bzw. des Ventiltellers 6 mit vollzieht. An der Oberseite des Magetankers 8 ist das Belüftungsrohr 14 herausgeführt und durchsetzt das Kopfstück 11 durch eine Bohrung 11.1, in der es verschiebbar ist. Oberhalb des Magnetsystems tritt das Belüftungsrohr 14 aus dem Ventil aus und seinem Eintrittsende 14.1 liegt ein Dichtungselement gegenüber, das aus einer nach unten offenen Dichtungskappe 15 besteht, die an ihrem Rand mit einer Dichtungsmanschette 15.1 versehen ist und über eine Halterung 15.2 fest mit dem Magnetsystem bzw. dem Ventilgehäuse 1 verbunden ist. Die Anordnung der Dichtungskappe 15 ist dabei so, daß bei geöffnetem Ventilteller 6 das obere Ende des Belüftungsrohres 14 in die Dichtungskappe 15 eintaucht, wobei sich die Dichtungsmanschette 15.1 an den Außenmantel des Belüftungsrohres 14 anlegt und somit die Eintrittsöffnung 14.1 gegen den Außenraum abschließt. Bei auf dem Ventilsitz 5 aufsitzendem Ventilteller 6 tritt die Eintrittsöffnung 14.1 des Belüftungsrohres 14 aus der Dichtungskappe 15 aus.

Damit eventuell bei einem in der Ventilkammer 2 auftretenden Überdruck durch das Belüftungsrohr 14 emporge drückte Flüssigkeit, die aus der Eintrittsöffnung 14.1 austreten könnte, nicht in das Magnetsystem gelangt, ist die Eintrittsöffnung 14.1 des Belüftungsrohres 14 von einem schalenförmigen, mit dem Belüftungsrohr 14 fest verbundenen Auffangbehälter 16 umgeben.

Die Rollmembran 13 und der in sie intergrierte Ventilteller 6 sind so ausgebildet, daß die in Öffnungsrichtung, also in Fig. 1 nach oben wirksame Wirkungsfläche R der Rollmembran 13, kleiner ist als die in Schließrichtung wirksame Wirkungsfläche T des Ventiltellers 6. Hiermit wird erreicht, daß einerseits das Schließen des Ventils durch den Mediumsdruck unterstützt wird, andererseits aber vom Magnetsystem nur die Öffnungskraft aufgebracht werden muß, die durch die Differenz der auf die Wirkungsflächen R und T wirkenden Drucke gegeben ist.

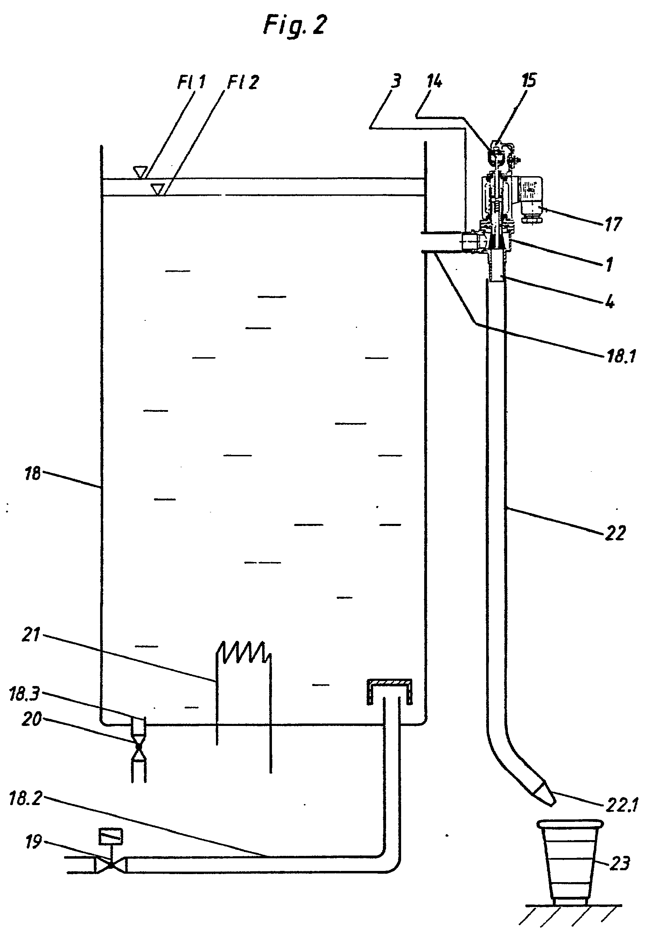

Im folgenden wird unter Hinzunahme von Fig. 2 die Anwendung und Wirkungsweise des oben beschriebenen Ventils erläutert.

In Fig. 2 ist schematisch ein Heißgetränkeautomat dargestellt mit einem Boiler 18, in dem die durch ein Heißelement 21 zu erhitzende Flüssigkeit enthalten ist, wobei der Flüssigkeitsspiegel zwischen den Werten F11 und F12 schwanken kann.

Die Flüssigkeit wird dem Boiler 18 von unten durch eine Zuführungsleitung 18.2 zugeführt, in der ein Ventil 19 angeordnet ist. Die vollständige Entleerung des Boilers 18 zur Reinigung kann über einen Ablaufstutzen 18.3 erfolgen, in dem ein Ventil 20 angeordnet ist.

Die Entnahme der erhitzten Flüssigkeit zur Erzeugung eines Getränkes erfolgt durch den im Oberteil des Boilers 18 angeordneten Entnahmestutzen 18.1, der an den Zuflußkanal 3 des in Fig. 1 dargestellten Ventils angeschlossen ist. An den Abflußkanal 4 des Ventils schließt sich ein Schlauchstück 22 an, dessen Austrittsöffnung 22.1 in der Nähe des Bodens des Boilers 18 angeordnet ist. Durch diese Austrittsöffnung 22.1 gelangt das Getränk oder das Brühwasser direkt in ein Gefäß 23. Infolge der durch diese Anordnung gegebenen hydrostatischen Verhältnisse wirkt die im Schlauch 22 vorhandene Flüssigkeitssäule unterstützend auf die Durchflußwerte des Ventils. Wenn das Ventil angesteuert über das Magnetsystem öffnet, so strömt die Flüssigkeit aus dem Boiler 18, den Zuflußkanal 3 und den Abflußkanal 4 sowie den Schlauch 22 in das Gefäß 23. In dieser Stellung des Ventils ist in der bereits beschriebenen Weise die Eintrittsöffnung 14.1 des Belüftungsrohres 14 verschlossen, so daß keine Belüftung des Abflußkanals 4 bzw. des Schlauches 22 eintritt.

Beim Schließen des Ventils wird, sobald der Ventilteller 6 auf dem Ventilsitz 5 aufsitzt, die Eintrittsöffnung 14.1 freigegeben und Außenluft strömt durch die Austrittsöffnung 14.2 am unteren Ende des Belüftungsrohres 14 in den Abflußkanal 4 und den Schlauch 22, so daß dieser vollständig von Flüssigkeit entleert wird.

## Patentansprüche

1. Elektromagnetventil, insbesondere Auslaufventil für Heißgetränkeautomaten, mit einem Ventilgehäuse (1), in dem eine Ventilkammer (2) angeordnet ist, die mit einem ersten Anschlußkanal direkt und mit einem zweiten Anschlußkanal über einen Ventilsitz (5) verbunden ist, wobei einer der beiden Anschlußkanäle als Zuflußkanal und der andere als Abflußkanal dient und mit einem am Ventilgehäuse angeordneten Magnetsystem mit einer Magnetspule (9), in welcher ein in einem Führungsrohr (10) geführter Magnetanker (8) angeordnet ist, der einem im Oberteil der Magnetspule angeordneten, mit einem Magnetjoch verbundenen Kopfstück (11) gegenüberliegt und der an seinem, dem Ventilsitz zugekehrten Ende über einen Ventilschaft (7) mit einem Ventilteller (6) verbunden ist und mit einer Vorrichtung zur Belüftung des Abflußkanals im geschlossenen Zustand des Ventils, die eine axial durch das Kopfstück nach außen geführte Bohrung aufweist, dadurch gekennzeichnet, daß der erste Anschlußkanal als Zuflußkanal (3) und der zweite Anschlußkanal als Abflußkanal (4) dient und die Ventilkammer (2) gegen den Innenraum des Führungsrohres (10) durch eine Trennmembran (13) abgeschlossen ist, deren Außenrand dichtend mit dem Ventilgehäuse (1) und deren Innenrand dichtend mit dem Ventilschaft (7) verbunden ist und daß axial durch den Ventilteller (6), den Ventilschaft (7) und den Magnetanker (8) ein mit diesen Teilen formschlüssig verbundenes Belüftungsrohr (14) geführt ist, das aus dem dem Kopfstück (11) zugekehrten Ende des Magetankers (8) heraus- und verschiebbar durch die Bohrung (11.1) des Kopfstückes (11) in den Außenraum geführt ist und dessen Eintrittsöffnung (14.1) einem fest mit dem Ventilgehäuse (1) verbundenen Dichtungselement (15) gegenüberliegt, welches die Eintrittsöffnung (14.1) bei geöffnetem Ventil verschließt, während die Austrittsöffnung (14.2) des Belüftungsrohres (14) an der dem Abflußkanal (4) zugewandten Seite des Ventiltellers (6) liegt.

2. Ventil nach Anspruch 1, dadurch gekennzeichnet, daß das Dichtungselement (15) so angeordnet ist, daß die Eintrittsöffnung (14.1) des Belüftungsrohres (14) erst freigegeben wird, wenn der Ventilteller (6) auf dem Ventilsitz (5) aufsitzt.

3. Ventil nach Anspruch 1 oder 2, dadurch gekennzeichnet, daß das Dichtungselement als Dichtungskappe (15) ausgebildet ist, in die das die Eintrittsöffnung (14.1) aufweisende Ende des Belüftungsrohres (14) bei der Öffnungsbewegung des Ventiltellers (6) eintritt und am äußeren Rand der Dichtungskappe (15) eine sich beim Eintritt des Rohrendes an die Außenwände des Belüftungsrohres (14) anlegende Dichtungsmanschette (15.1) angeordnet ist.

4. Ventil nach einem der Ansprüche 1 bis 3, dadurch gekennzeichnet, daß an dem in den Außenraum geführten Teil des Belüftungsrohres (14) in der Nähe des Eintrittsendes (14.1) ein das Belüftungsrohr umgebender Auffangbehälter (16) für aus dem Eintrittsende (14.1) austretende Flüssigkeit angeordnet ist.

5. Ventil nach einem der Ansprüche 1 bis 4, dadurch gekennzeichnet, daß die Trennmembran (13) einstückig mit dem Ventilteller (6) verbunden ist.

6. Ventil nach einem der Ansprüche 1 bis 5, dadurch gekennzeichnet, daß die Trennmembran als Rollmembran (13) ausgebildet ist.

7. Ventil nach Anspruch 6, dadurch gekennzeichnet, daß die in Öffnungsrichtung wirksame Wirkungsfläche (R) der Rollmembran (13) kleiner ist als die in Schließrichtung wirksame Wirkungsfläche (T) des Ventiltellers (6).

**Claims**

1. Solenoid valve, especially discharge valve for hot drink dispensers, having a valve housing (1) in which there is arranged a valve chamber (2) which is directly connected to a first connecting channel and is connected to a second connecting channel via a valve seat (5), one of the two connecting channels serving as inflow channel and the other serving as outflow channel, and having a magnet system which is arranged on the valve housing and has a magnet coil (9) in which a magnet armature (8) guided in a guide pipe (10) is arranged, which magnet armature lies opposite a head piece (11) which is arranged in the top part of the magnet coil and is connected to a magnet yoke, and which is connected, at its end facing the valve seat, to a valve disc (6) via a valve shaft (7), and has a device for venting the outflow channel in the closed state of the valve, which device has a bore running axially through the head piece to the outside, characterized in that the first connecting channel serves as inflow channel (3) and the second connecting channel serves as outflow channel (4) and the valve chamber (2) is closed off from the interior of the glide pipe (10) by a separating diaphragm (13), the outer edge of which is connected sealingly to the valve housing (1) and the inner edge of which is connected sealingly to the valve shaft (7), and in that running axially through the valve disc (6), the valve shaft (7) and the magnet armature (8) is an air pipe (14) which is connected positively to these parts and is guided out of the end of the magnet armature (8) facing the head piece (11) and displaceably through the bore (11.1) of the head piece (11) into the outside space, and the inlet opening (14.1) of which lies opposite a sealing element (15) connected firmly to the valve housing (1), which sealing element seals the inlet opening (14.1) when the valve is open, while the outlet opening (14.2) of the air pipe (14) lies on the side of the valve disc (6) facing the outflow channel (4).

2. Valve according to Claim 1, characterized in that the sealing element (15) is arranged so that the inlet opening (14.1) of the air pipe (14) is only released when the valve disc (6) is seated on the valve seat (5).

3. Valve according to Claim 1 or 2, characterized in that the sealing element is designed as a sealing cap (15) into which the end of the air pipe (14) having the inlet opening (14.1) enters during the opening movement of the valve disc (6), and there is arranged at the outer edge of the sealing cap (15) a gasket (15.1) which bears against the outer walls of the air pipe (14) when the pipe end enters.

4. Valve according to one of Claims 1 to 3, characterized in that there is arranged on the part of the air pipe (14) led into the outside space in the vicinity of the inlet end (14.1) a collection container (16) surrounding the air pipe for liquid emerging out of the inlet end (14.1).

5. Valve according to one of Claims 1 to 4, characterized in that the separating diaphragm (13) is connected integrally to the valve disc (6).

6. Valve according to one of Claims 1 to 5, characterized in that the separating diaphragm is designed as a roll diaphragm (13).

7. Valve according to Claim 6, characterized in that the effective area (R) of the roll diaphragm (13) active in the opening direction is smaller than the active area (T) of the valve disc (6) active in the closing direction.

**Revendications**

1. Soupape électromagnétique, en particulier soupape de sortie pour distributeurs automatiques de boissons chaudes, comprenant un carter de soupape (1) dans lequel est disposé une chambre de soupape (2) laquelle est reliée directement à un premier canal de raccordement et à un deuxième canal de raccordement par un siège de soupape (5), l'un des deux canaux de raccordement servant de canal d'alimentation et l'autre servant de canal d'évacuation et comprenant, disposé sur le carter de soupape, un système magnétique comprenant une bobine magnétique (9) dans laquelle est disposé un induit (8) passant dans un tube de guidage (10), l'induit (8) faisant face à une pièce d'extrémité (11) reliée à une culasse d'aimant et disposée dans la partie supérieure de la bobine magnétique et reliée sur son extrémité dirigée vers le siège de soupape, par une tige de soupape (7), à un plateau de soupape (6) et comprenant un dispositif pour la ventilation du canal d'évacuation lorsque la soupape est fermée, ce dispositif présentant un perçage menant vers l'extérieur axialement à travers la pièce d'extrémité, caractérisée par le fait que le premier canal de raccordement sert de canal d'alimentation (3) et le deuxième canal de raccordement sert de canal d'évacuation (4) et que la chambre de soupape (2) est fermée par rapport à l'espace intérieur du tube de guidage (10) par une membrane de séparation (13) dont le bord extérieur est relié de manière étanche au carter de soupape (1) et dont le bord intérieur est relié de manière étanche à la tige de soupape (7), et par le fait qu'un tube de ventilation (14) est guidé axialement par le plateau de soupape (6), la tige de soupape (7) et l'induit (8), pièces avec lesquelles ce tube (14) est mécaniquement solidaire et qui passe, en sortant de l'extrémité de l'induit (8) orientée vers la pièce d'extrémité (11), par le perçage (11.1) de ladite pièce d'extrémité (11) et pénètre dans l'espace extérieur, et dont l'orifice d'entrée (14.1) fait face à un élément d'étanchéité (15) relié de manière permanente au carter de soupape (1), cet élément (15) fermant l'orifice d'entrée (14.1) lorsque la soupape est ouvert, alors que l'orifice de sortie (14.3) du tube ventilation (14) est placé sur le côté du plateau de soupape (6) orienté vers le canal d'évacuation (4).

2. Soupape selon la revendication 1, caractérisée par le fait que l'élément d'étanchéité (15) est disposé de telle sorte que l'orifice d'entrée (14.1) du tube de ventilation (14) n'est dégagé que lorsque le plateau de soupape (6) est placé sur le siège de soupape (5).

3. Soupape selon la revendication 1 ou 2, caractérisée par le fait que l'élément d'étanchéité est réalisé sous la forme d'un capuchon (15) dans lequel pénètre l'extrémité du tube de ventilation (14) munie de l'orifice d'entrée (14.1) lors du mouvement d'ouverture du plateau de soupape (6) et que sur le bord extérieur du capuchon (15) est disposée une manchette d'étanchéité (15.1) qui vient s'appliquer sur les parois extérieures du tube de ventilation (14) lorsque l'extrémité du tube (14) pénètre dans le capuchon (15).

4. Soupape selon l'une des revendications 1 à 3, caractérisée par le fait que sur la partie du tube de ventilation (14) passant dans l'espace extérieur, à proximité de l'extrémité (14.1) est disposé un réceptacle (16) entourant le tube de ventilation recevant le liquide sortant par l'extrémité (14.1).

5. Soupape selon l'une des revendications 1 à 4, caractérisée par le fait que la membrane de séparation (13) forme une seule pièce avec le plateau de soupape (6).

6. Soupape selon l'une des revendications 1 à 5, caractérisée par le fait que la membrane de séparation est réalisée sous la forme d'une membrane à rideau.

7. Soupape selon la revendication 6, caractérisée par le fait que la surface (R) de la membrane à rideau (13) active dans la direction d'ouverture est inférieure à la surface (T) du plateau de soupape (6) active dans la direction de fermeture.

Fig. 1

# Fig. 2